# EUROPEAN PATENT APPLICATION

(11) **EP 2 424 259 A2**
(43) Date of publication of application: **29.02.2012**
(21) Application number: 11161599.3
(22) Date of filing: 08.04.2011
(51) Int. Cl.: H04N 13/04

(54) **Stereoscopic video display system with 2D/3D shutter glasses**

(30) Priority: 30.08.2010 JP 2010192495
(71) Applicant: Kabushiki Kaisha Toshiba, Tokyo 105-8001 (JP)
(72) Inventor: Suzuki, Masakazu, Tokyo 105-8001 (JP)
(74) Representative: Henkel, Breuer & Partner

(57) **Abstract**

According to one embodiment, stereoscopic glasses include a first shutter (311), a second shutter (312), a receiver (32), and a controller (35). The first shutter (311) allows or hinders left eye vision. The second shutter (312) allows or hinders right eye vision. The receiver (32) receives a first control signal to open or close the first shutter (311) and a second control signal to open or close the second shutter (312) from a display device (10) that, in synchronization with display timing of a video signal for left eye and a video signal for right eye, displays the video signals. The controller (35) controls the first shutter (311) and the second shutter (312) to open or close based on the first control signal and the second control signal, respectively, while switching between stereoscopic view mode and planar view mode depending on the distance to the display device (10).

## Description

### FIELD

Embodiments described herein relate generally to stereoscopic glasses, a stereoscopic video display device, and a stereoscopic video display system.

### BACKGROUND

There are available stereoscopic video display devices such as television broadcast receivers that are capable of providing three-dimensional video to users by using two types of videos that have disparity corresponding to the interocular distance. Such a stereoscopic video display device, for example, alternately displays video for right eye and video for left eye, and controls the opening and closing of a left eye shutter and a right eye shutter of stereoscopic glasses, thereby enabling the user wearing the stereoscopic glasses to experience stereoscopic video.

A conventional technology has been known in which planar (two-dimensional) video converted from stereoscopic (three-dimensional) video is displayed according to the current position of the user with respect to the display screen (the distance from the display screen) so that the user can view the video in a good condition.

In the conventional technology, the display device displays video while switching stereoscopic video to planar video. Accordingly, if a plurality of users each wearing stereoscopic glasses view the video on the same display device, all the users view the same video. That is, in this case, even a user located at an appropriate position is necessitated to view planar video. Thus, there is a need to further improve the user convenience.

It is therefore an object of the invention to provide stereoscopic glasses, a stereoscopic video display device, and a stereoscopic video display system capable of switching between stereoscopic video display and planar video display according to the position where a user is viewing stereoscopic video.

### SUMMARY

To overcome the problems and achieve the object mentioned above, according to one embodiment, stereoscopic glasses comprise a first shutter, a second shutter, a receiver, and a controller. The first shutter is configured to allow or hinder left eye vision. The second shutter is configured to allow or hinder right eye vision. The receiver is configured to receive a first control signal to open or close the first shutter and a second control signal to open or close the second shutter from a display device that, in synchronization with display timing of a video signal for left eye and a video signal for right eye, displays the video signals. The controller is configured to control the first shutter and the second shutter to open or close based on the first control signal and the second control signal, respectively, while switching between stereoscopic view mode and planar view mode depending on the distance to the display device.

### BRIEF DESCRIPTION OF THE SEVERAL VIEWS OF THE DRAWINGS

A general architecture that implements the various features of the invention will now be described with reference to the drawings. The drawings and the associated descriptions are provided to illustrate embodiments of the invention and not to limit the scope of the invention.

FIG. 1 is an exemplary schematic block diagram of a configuration of a digital television broadcast receiver according to a first embodiment;
FIG. 2 is an exemplary block diagram of a configuration of a superposition processor illustrated in FIG. 1 in the first embodiment;
FIG. 3 is an exemplary schematic diagram of a configuration of stereoscopic glasses in the first embodiment;
FIG. 4 is an exemplary schematic diagram for explaining the relationship between video frames displayed on the digital television broadcast receiver and liquid crystal display (LCD) shutter glasses in the first embodiment;
FIG. 5 is an exemplary flowchart of the shutter control operation of the stereoscopic glasses in the first embodiment;
FIG. 6 is an exemplary schematic block diagram of a configuration of a digital television broadcast receiver according to a second embodiment;
FIG. 7 is an exemplary schematic diagram of an external configuration of stereoscopic glasses in the second embodiment; and
FIG. 8 is an exemplary block diagram of a configuration of the stereoscopic glasses in the second embodiment.

### DETAILED DESCRIPTION

Various embodiments will be described hereinafter with reference to the accompanying drawings.

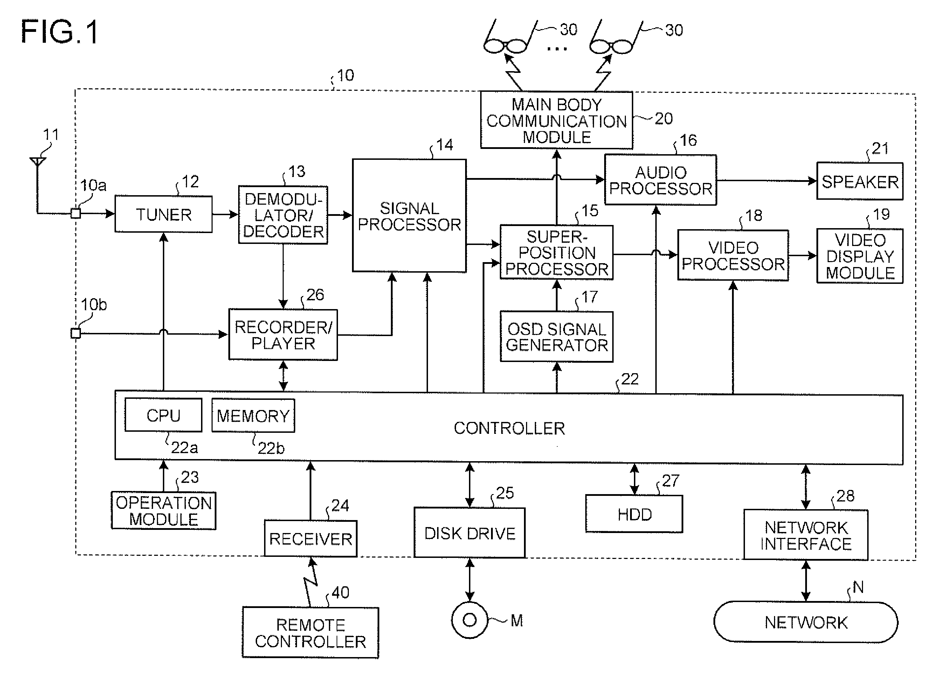

FIG. 1 illustrates a configuration of a digital television broadcast receiver (a stereoscopic video display device) 10 according to a first embodiment. The digital television broadcast receiver 10 is a video display device capable of displaying video based on a video signal for ordinary planar (two-dimensional) display and a video signal for stereoscopic (three-dimensional) display.

A digital television broadcast signal received by an antenna 11 is supplied via an input terminal 10a to a tuner 12, at which the broadcast signal of a desired channel is selected. The broadcast signal selected by the tuner 12 is then supplied to a demodulator/decoder 13 and decoded into a digital video signal and a digital audio signal. The digital signals are output to a signal processor 14.

With respect to the digital video signal as well as the digital audio signal supplied by the demodulator/decoder 13, the signal processor 14 performs predetermined digital signal processing, which includes conversion of video signals for ordinary planar (two-dimensional) display into video signals for stereoscopic (three-dimensional) display or conversion of video signals for stereoscopic display into video signals for planar display. Subsequently, the signal processor 14 outputs the digital video signal to a superposition processor 15 and the digital audio signal to an audio processor 16.

On the digital video signal supplied by the signal processor 14, the superposition processor 15 superimposes an on-screen display (OSD) signal generated by an OSD signal generator 17 and then outputs the resultant signal. In this case, if the video signal supplied by the signal processor 14 is a video signal for ordinary planar display, the superposition processor 15 superimposes the original OSD signal generated by the OSD signal generator 17 on the video signal and then outputs the resultant signal.

On the other hand, if the video signal supplied by the signal processor 14 is a video signal for stereoscopic display, the superposition processor 15 performs, as described in detail later, signal processing for stereoscopic display corresponding to the input video signal for stereoscopic display on the OSD signal generated by the OSD signal generator 17 before superimposing the OSD signal on the input video signal. The superposition processor 15 then outputs the resultant signal.

The digital video signal output from the superposition processor 15 is supplied to a video processor 18. The video processor 18 converts the digital video signal into an analog video signal in a format displayable by a flat-screen video display module 19 provided with, for example, an LCD panel at the latter stage. The analog video signal output from the video processor 18 is supplied to the video display module 19 for video display.

A main body communication module 20 is connected to the superposition processor 15, and transmits, to stereoscopic glasses 30, a left-eye shutter control signal and a right-eye shutter control signal output from a glasses controller 159, which will be described later. The main body communication module 20 may perform communication in any manner such as, for example, using Bluetooth (registered trademark), infrared communication, DLP-Link (registered trademark), or the like.

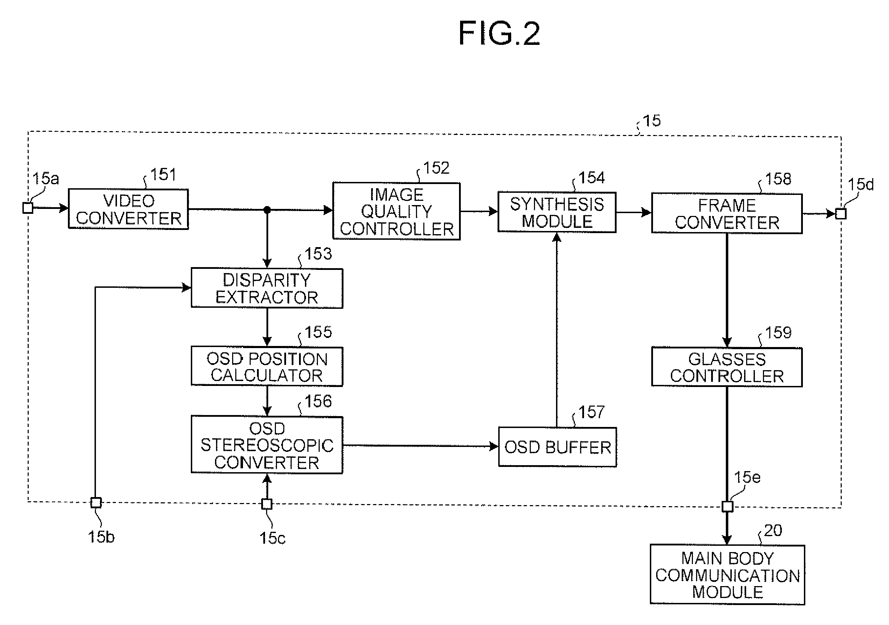

FIG. 2 illustrates an example of a configuration of the superposition processor 15. The digital video signal output from the signal processor 14 is supplied to a video converter 151 via an input terminal 15a. If the input video signal is a video signal for stereoscopic (three-dimensional) display, the video converter 151 converts the video signal into a specific video format and outputs it to an image quality controller 152 and a disparity extractor 153.

Regarding a video signal for stereoscopic display, various video formats are available. Examples of the video formats include a frame packing format and a side-by-side format. In the frame packing format, within a single frame synchronization period, a right-eye video frame is output after a left-eye video frame. In the side-by-side format, within a single horizontal period, a right-eye video line is output after a left-eye video line. Besides, with respect to each video format, there exists a variety in video size, scanning method (interlace/progressive), and the like.

Thus, in the first embodiment, it is assumed that the video converter 151 performs processing such as scaling or interlace/progressive (IP) conversion on an input video signal for stereoscopic display. With this, the video signal is converted into the frame packing format of a predetermined size (for example, 1920 pixels in horizontal direction x 1080 lines in vertical direction) and output to the image quality controller 152 and the disparity extractor 153 in synchronization with a vertical synchronization signal.

The image quality controller 152 performs image quality adjustment such as brightness adjustment, contrast adjustment, and hue adjustment on the input video signal under the control of a controller 22, and output it to a synthesis module 154 in synchronization with the vertical synchronization signal.

With respect to the video signal for stereoscopic display converted into the frame packing format by the video converter 151, the disparity extractor 153 compares the left-eye frame and the right-eye frame, and extracts disparity.

The disparity extraction performed by the disparity extractor 153 indicates, based on the position of an object displayed in the left-eye frame, the horizontal shift of the same object displayed in the right-eye frame by the number of pixels. The disparity extraction can be performed without difficulty with motion-vector technology for detecting the shifting position of the same object displayed in consecutive frames. More specifically, numbers are assigned to pixels arranged in the horizontal direction on the screen from left to right. Then, from the number of a pixel at a predetermined position of a particular object displayed in the left-eye frame, the number of a pixel at the same position of the object displayed in the right-eye frame is subtracted. In this manner, the disparity therebetween can be represented by the number of pixels.

In this case, if the disparity is a negative value, the right-eye video is located on the right side than the left-eye video, and the video image of the corresponding object is formed deep in the screen. On the other hand, if the disparity is a positive value, the right-eye video is located on the left side than the left-eye video, and the video image of the corresponding object is formed in front of the screen.

Besides, according to a control signal received from the controller 22 via an input terminal 15b, the disparity extractor 153 sets the disparity to zero. In the state where the disparity is zero, the left-eye video and the right-eye video are located at the same position, and the video image is formed as planar (two-dimensional) video on the screen.

The disparity extracted by the disparity extractor 153 is supplied to an OSD position calculator 155. The OSD position calculator 155 performs calculation based on the input disparity to correct the display position for displaying OSD in a stereoscopic manner, and then outputs a disparity control signal indicating the calculation result.

More specifically, in the video display state where the disparity extracted by the disparity extractor 153 does not vary in the temporal axis direction or the disparity is moderately varying in the temporal axis direction, the OSD position calculator 155 performs calculation to correct the display position for displaying OSD in a stereoscopic manner. That is, when the disparity is drastically varying in the temporal axis direction, the video is drastically moving in the depth direction. In such a state, the user is conscious of the video. If the superimposing OSD also drastically varies in the depth direction, the video becomes visually undesirable. Accordingly, in the state where the disparity is drastically varying, the OSD position calculator 155 outputs a disparity control signal indicating the result calculated when the disparity varies less. Meanwhile, when the disparity is zero, the display position is not to be corrected.

The disparity control signal output from the OSD position calculator 155 is supplied to an OSD stereoscopic converter 156. Besides, the OSD signal generated by the OSD signal generator 17 is also supplied to the OSD stereoscopic converter 156 via an input terminal 15c. The OSD stereoscopic converter 156 generates an left-eye OSD signal to be superimposed on the left-eye video frame as well as an right-eye OSD signal to be superimposed on the right-eye video frame from the input OSD signal based on the disparity control signal, and stores the OSD signals in an OSD buffer 157.

The video signal synthesized by the synthesis module 154 is supplied to a frame converter 158. In the frame converter 158, the vertical synchronization frequency of the video signal is converted to be a double value, i.e., the frame frequency is doubled in speed. Then, the video signal is output through an output terminal 15d to the video display module 19 via the video processor 18. With this, the right-eye video frame and the left-eye video frame are alternately displayed on the video display module 19.

A frame synchronization signal generated by the frame converter 158 is supplied to the glasses controller 159. The glasses controller 159 generates shutter control signals for left and right eyes in synchronization with the frame synchronization signal received from the frame converter 158, and then outputs the shutter control signals through an output terminal 15e to the stereoscopic glasses 30 via the main body communication module 20.

Referring back to FIG. 1, the audio processor 16 converts the digital audio signal received from the signal processor 14 into an analog audio signal in a format reproducible by a speaker 21 at the latter stage. The analog audio signal output from the audio processor 16 is supplied to the speaker 21 for audio playback.

In the digital television broadcast receiver 10, all operations including the various receiving operations as described above are comprehensively controlled by the controller 22. The controller 22 comprises a built-in central processing unit (CPU) 22a. Upon receipt of operation information from an operation module 23 installed in the main body of the digital television broadcast receiver 10 or operation information received by a receiver 24 from a remote controller 40, the controller 22 controls each module such that the operation information is reflected in the control.

For this control, the controller 22 uses a memory 22b. The memory 22b mainly comprises a read only memory (ROM) that stores a control program to be executed by the CPU 22a, a random access memory (RAM) that provides a work area to the CPU 22a, and a nonvolatile memory that stores various types of setting information and control information.

To the controller 22 is connected a disk drive 25. The disk drive 25 allows an optical disk M such as a digital versatile disk (DVD) to removably inserted thereinto and has the function of reading/writing digital data with respect to the inserted optical disk M.

In response to the user operation on the operation module 23 or the remote controller 40, the controller 22 can control a recorder/player 26 to encode digital video and audio signals received from the demodulator/decoder 13 and convert the digital signals into a predetermined recording format so that the resultant signals are supplied to the disk drive 25 and recorded on the optical disk M.

In response to the user operation on the operation module 23 or the remote controller 40, the controller 22 can control the disk drive 25 to read digital video and audio signals from the optical disk M so that the digital signals are decoded by the recorder/player 26 and then supplied to the signal processor 14 for video display and audio playback as described above.

To the controller 22 is connected a hard disk drive (HDD) 27. In response to the user operation on the operation module 23 or the remote controller 40, the controller 22 can control the recorder/player 26 to encode digital video and audio signals received from the demodulator/decoder 13 and convert the digital signals into a predetermined recording format so that the resultant signals are recorded on the HDD 27.

In response to the user operation on the operation module 23 or the remote controller 40, the controller 22 can control the recorder/player 26 to decode digital video and audio signals read from the HDD 27 so that the resultant signals are supplied to the signal processor 14 for video display and audio playback as described above.

An input terminal 10b is connected to the digital television broadcast receiver 10. The input terminal 10b allows the digital television broadcast receiver 10 to directly receive digital video and audio signals from the outside. Under the control of the controller 22, the digital video and audio signals received via the input terminal 10b are supplied to the signal processor 14 through the recorder/player 26 for video display and audio playback as described above.

Under the control of the controller 22, the digital video and audio signals received via the input terminal 10b are processed by the recorder/player 26 and are supplied to the disk drive 25 to be recorded on the optical disk M or the HDD 27 for playback.

Besides, in response to the user operation on the operation module 23 or the remote controller 40, the controller 22 controls the disk drive 25 to record digital video and audio signals recorded on the optical disk M in the HDD 27, and to record digital video and audio signals recorded in the HDD 27 on the optical disk M.

The controller 22 is also connected to a network interface 28, which is further connected to an external network N. The network interface 28 performs communication with external devices (not illustrated) via the network N. Via the network interface 28, the controller 22 can access the external devices connected to the network N for information communication and becomes able to use the services provided by the external devices.

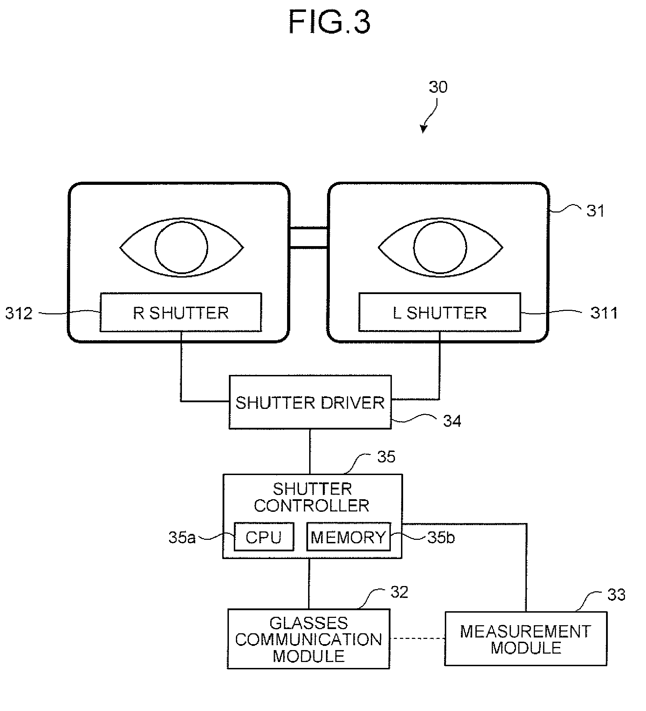

The stereoscopic glasses 30 will be described with reference to FIG. 3. FIG. 3 illustrates a configuration of the stereoscopic glasses 30 of the first embodiment. As illustrated in FIG. 3, the stereoscopic glasses 30 comprise LCD shutter glasses 31, a glasses communication module 32, a measurement module 33, a shutter driver 34, and a shutter controller 35.

The LCD shutter glasses 31 comprise a left-eye LCD shutter (L shutter) 311 that allows or hinders left eye vision and a right-eye LCD shutter (R shutter) 312 that allows or hinders right eye vision. While wearing the LCD shutter glasses 31, the user views left-eye and right-eye images displayed alternately with his/her left and right eyes, respectively. Thus, the user experiences stereoscopic vision.

The glasses communication module 32 is a receiver compatible with the transmission system of the main body communication module 20. The glasses communication module 32 receives left-eye and right-eye shutter control signals from the main body communication module 20.

The measurement module 33 measured the distance between the stereoscopic glasses 30 and the digital television broadcast receiver 10 (the video display module 19), and outputs a distance signal indicating the distance to the shutter controller 35. The distance may be measured by any technique including known ones. For example, if the distance signal is transmitted via infrared communication, the measurement module 33 may measure the distance between the stereoscopic glasses 30 and the digital television broadcast receiver 10 based on the level of receiving sensitivity of the glasses communication module 32 for receiving the shutter control signals.

According to control signals received from the shutter controller 35, the shutter driver 34 opens/closes the L shutter 311 and the R shutter 312 to allow or prevent the transmission of video (light) displayed on the digital television broadcast receiver 10.

The shutter controller 35 comprises a built-in CPU 35a. According to left-eye and right-eye shutter control signals received through the glasses communication module 32, the shutter controller 35 controls the L shutter 311 and the R shutter 312 to open/close. Besides, according to a distance signal received from the measurement module 33, the shutter controller 35 controls the L shutter 311 and the R shutter 312 to open/close for stereoscopic view or planar view. For this control, the shutter controller 35 uses a memory 35b. The memory 35b mainly comprises a ROM that stores a control program to be executed by the CPU 35a, a RAM that provides a work area to the CPU 35a, and a nonvolatile memory that stores various types of setting information and control information.

More specifically, if the distance indicated by the distance signal, i.e., the distance between the stereoscopic glasses 30 and the digital television broadcast receiver 10, is within a predetermined range (hereinafter, "stereoscopic view available range"), the shutter controller 35 outputs a drive signal to the shutter driver 34 to alternately open and close the L shutter 311 and the R shutter 312 in synchronization with the left-eye and right-eye shutter control signals received through the glasses communication module 32. Hereinafter, the mode of this drive signal output operation will be referred to as "stereoscopic view mode".

By outputting a drive signal in the stereoscopic view mode, the shutter controller 35 realizes that the L shutter 311 is open and the R shutter 312 is closed when a left-eye video frame is being displayed on the digital television broadcast receiver 10, while the L shutter 311 is closed and the R shutter 312 is open when a right-eye video frame is being displayed on the digital television broadcast receiver 10.

On the other hand, if the distance indicated by the distance signal, i.e., the distance between the stereoscopic glasses 30 and the digital television broadcast receiver 10, is in a range out of the stereoscopic view available range described above (hereinafter, "stereoscopic view unavailable range") , the shutter controller 35 outputs a drive signal to the shutter driver 34 to simultaneously open and close the L shutter 311 and the R shutter 312 in synchronization with the left-eye or right-eye shutter control signal received through the glasses communication module 32. Hereinafter, the mode of this drive signal output operation will be referred to as "planar view mode".

By outputting a drive signal in the planar view mode, the shutter controller 35 realizes that the L shutter 311 and the R shutter 312 are open when a left-eye video frame (or a right-eye video frame) is being displayed on the digital television broadcast receiver 10, while the L shutter 311 and the R shutter 312 are closed when a right-eye video frame (or a left-eye video frame) is being displayed on the digital television broadcast receiver 10.

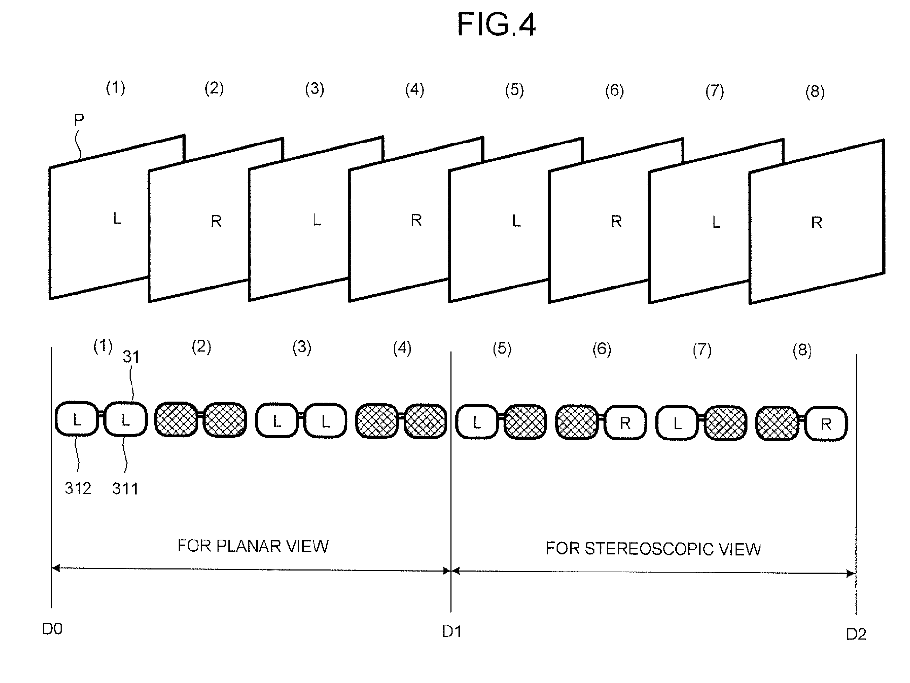

With reference to FIG. 4, a description will be given of the operation of the shutter controller 35. FIG. 4 is a schematic diagram for explaining the relationship between video signals (frames) displayed on the digital television broadcast receiver 10 and the LCD shutter glasses 31.

In FIG. 4, a video signal P is displayed on the video display module 19 of the digital television broadcast receiver 10. In this example, left-eye video L represents a left-eye video signal P, while right--eye video R represents a right-eye video signal P. As illustrated in FIG. 4, the left-eye video L and the right-eye video R are alternately displayed frame by frame. In the example of FIG. 4, eight video frames are displayed from left to right in the order of (1) to (8).

The reference letters L and R given to the L shutter 311 and the R shutter 312 of the LCD shutter glasses 31, respectively, represent that the designated shutter is open to allow the view of the left-eye video L or the right-eye video R. The numerals (1) to (8) above the LCD shutter glasses 31 correspond to the numerals (1) to (8) assigned to the left-eye video L and the right-eye video R, and indicate the open/closed state of the L shutter 311 and the R shutter 312 when video assigned the same numeral is being displayed on the video display module 19.

FIG. 4 also illustrates the distance between the digital television broadcast receiver 10 and the stereoscopic glasses 30. Distance D0 corresponds to the display position (display screen) of the digital television broadcast receiver 10. The distance increases as D0 < D1 < D2. In the example of FIG. 4, the distance D0 to D1 is set to the stereoscopic view unavailable range, while the distance D1 to D2 is set to the stereoscopic view available range. It is assumed herein that the stereoscopic view unavailable range is defined based on view distance in which viewing stereoscopic video causes eyestrain. Meanwhile, the stereoscopic view available range is defined based on proper view distance in which viewing stereoscopic video does not cause eyestrain.

The shutter controller 35 outputs a drive signal to the shutter driver 34 in the stereoscopic view mode if the distance indicated by a distance signal is within the stereoscopic view available range (the distance D1 to D2) . With this, the L shutter 311 is open and the R shutter 312 is closed when the left-eye video L is being displayed, while the L shutter 311 is closed and the R shutter 312 is open when the right-eye video R is being displayed. Thus, the user wearing the stereoscopic glasses 30 views the left-eye video L with his/her left eye and the right-eye video R with his/her right eye. As a result, the user recognizes the stereoscopic image represented by the left-eye video L and the right-eye video R.

On the other hand, the shutter controller 35 outputs a drive signal to the shutter driver 34 in the planar view mode if the distance indicated by a distance signal is within the stereoscopic view unavailable range (the distance D0 to D1) . With this, the L shutter 311 and the R shutter 312 are open when the left-eye video L is being displayed, while the L shutter 311 and the R shutter 312 are closed when the right-eye video R is being displayed. Thus, the user wearing the stereoscopic glasses 30 views only the left-eye video L with his/her both eyes. As a result, the user recognizes the planar image represented by the left-eye video L.

In this manner, the shutter controller 35 switches between stereoscopic display and planar display according to the distance between the stereoscopic glasses 30 and the digital television broadcast receiver 10. More specifically, if the user wearing the stereoscopic glasses 30 is in a position within the distance (stereoscopic view unavailable range) where viewing stereoscopic video causes eyestrain, planar video can be provided to the user. This reduces the eyestrain of the user.

While an example is described with reference to FIG. 4 in which the user views the left-eye video L with his/her both eyes within the stereoscopic view unavailable range (the distance D0 to D1), it is not so limited, and the user may view the right-eye video R with his/her both eyes.

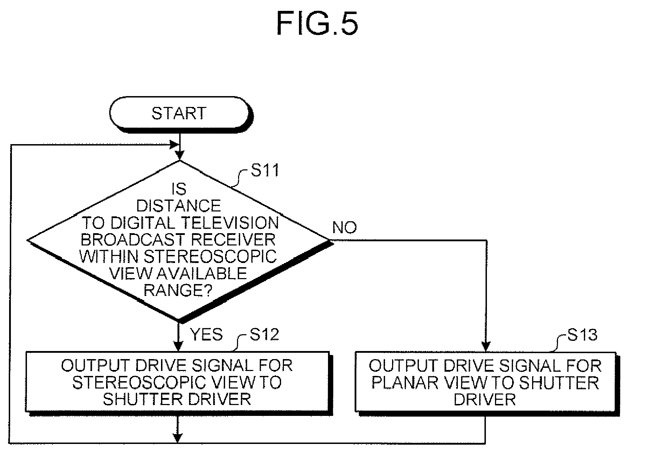

A description will be given of the operation of the stereoscopic glasses 30. FIG. 5 is a flowchart of the shutter control operation of the stereoscopic glasses 30. It is assumed herein that stereoscopic video is being displayed on the video display module 19 of the digital television broadcast receiver 10.

First, the shutter controller 35 of the stereoscopic glasses 30 determines whether the distance to the digital television broadcast receiver 10 measured by the measurement module 33 is within the stereoscopic view available range (S11) .

Having determined that the distance is within the stereoscopic view available range (Yea at S11), the shutter controller 35 operates in the stereoscopic view mode, and outputs a drive signal for stereoscopic view to the shutter driver 34 to alternately open and close the L shutter 311 and the R shutter 312 in synchronization with left-eye and right-eye shutter control signals received through the glasses communication module 32 (S12). Then, the process returns to S11.

On the other hand, having determined that the distance to the digital television broadcast receiver 10 measured by the measurement module 33 is within the stereoscopic view unavailable range (No at S11) , the shutter controller 35 operates in the planar view mode, and outputs a drive signal for planar view to the shutter driver 34 to simultaneously open and close the L shutter 311 and the R shutter 312 in synchronization with left-eye or right-eye, shutter control signal received through the glasses communication module 32 (S13). Then, the process returns to S11.

While stereoscopic video is being displayed on the digital television broadcast receiver 10, the shutter controller 35 repeats the process from S11 to S13 described above. In other words, the shutter controller 35 switches between the stereoscopic view mode and the planar view mode according to the position of the stereoscopic glasses 30, i.e., the position of the user who is viewing the stereoscopic video.

As described above, according to the first embodiment, the stereoscopic glasses 30 measures the distance to the digital television broadcast receiver 10 (the video display module 19) therefrom. According to the measured distance, the mode of opening and closing the LCD shutter glasses 31 is changed to switch the display mode of video available for view between the stereoscopic view mode and the planar view mode. Thus, according to the position of the user who is viewing stereoscopic video, i.e., the position of the stereoscopic glasses 30, the user can view video in the display mode suitable for the position. Even if a plurality of users are viewing the same stereoscopic video, the stereoscopic video is switched to planar video for only a user near the display screen. Thus, it is possible to reduce the eyestrain of the user near the display screen without affecting other users.

In the following, a second embodiment will be described. In the first embodiment, the distance between the digital television broadcast receiver 10 and the stereoscopic glasses 30 is measured by the measurement module 33 of the stereoscopic glasses 30. In the second embodiment, the digital television broadcast receiver measures the distance between the digital television broadcast receiver and the stereoscopic glasses, and notifies the stereoscopic glasses of the measured distance. Elements corresponding to those of the first embodiment are designated by like reference numerals, and their description will not be repeated.

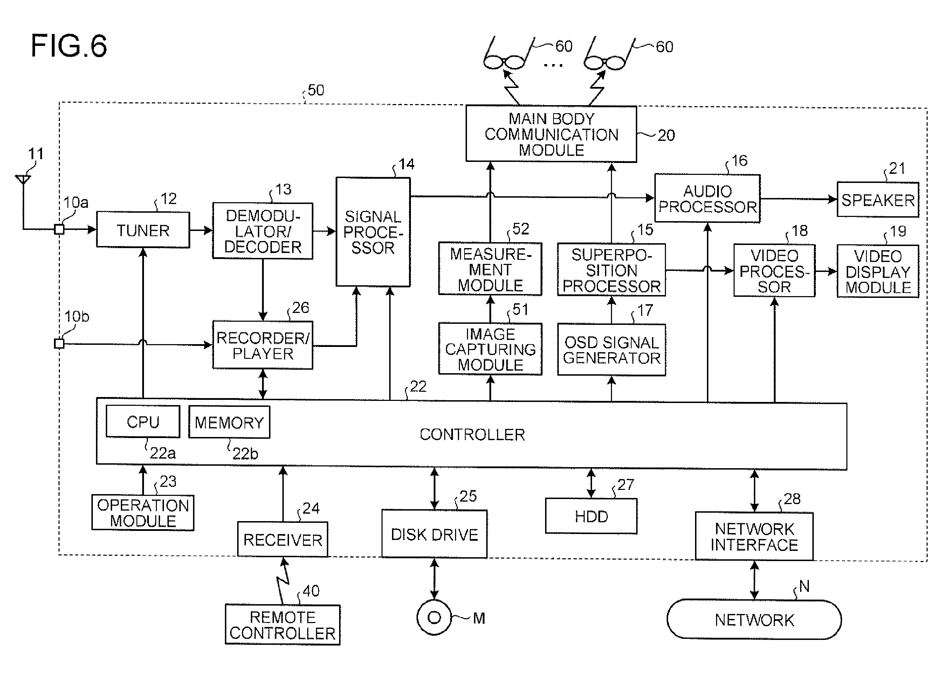

FIG. 6 illustrates a configuration of a digital television broadcast receiver 50 according to a second embodiment. The digital television broadcast receiver 50 comprises, in addition to the configuration previously described in connection with FIG. 1, an image capturing module 51 and a measurement module 52. The main body communication module 20 of the second embodiment performs communication using Bluetooth (registered trademark) capable of communicating with stereoscopic glasses 60 individually.

The image capturing module 51 is an image sensor such as a charge-coupled device (CCD) image sensor or a complementary metal oxide semiconductor (CMOS) image sensor located near the video display module 19. The image capturing module 51 captures an image of the user facing the digital television broadcast receiver 50, and outputs the captured image to the measurement module 52.

The measurement module 52 detects an index 60a attached to the stereoscopic glasses 60 worn by the user from the image captured by the image capturing module 51. The measurement module 52 measures the distance to the stereoscopic glasses 60 based on the value of the index 60a. More specifically, the measurement module 52 refers to a table that associates the value of each index attached to each pair of stereoscopic glasses with a distance to the video display module 19. The measurement module 52 then specifies the distance between the stereoscopic glasses 60 provided with the index 60a and the video display module 19 based on the value of the index 60a detected from the captured image.

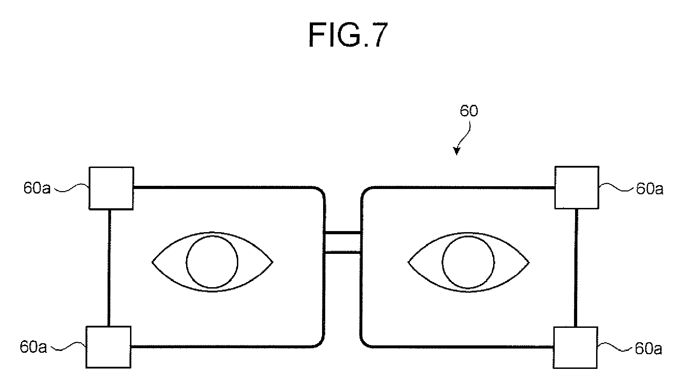

FIG. 7 schematically illustrates an external configuration of the stereoscopic glasses 60 of the second embodiment. As illustrated in FIG. 7, the index 60a is attached to the stereoscopic glasses 60. The index 60a is assigned a shape and a sign or a symbol unique to the stereoscopic glasses 60 so that the stereoscopic glasses 60 can be identified based on the index 60a. Although the index 60a is attached to four corners of the stereoscopic glasses 60 in the example of FIG. 7, the location and number of the index 60a are not limited thereto. Besides, while the distance to the stereoscopic glasses 60 is measured based on the index 60a in the second embodiment, it is not so limited. The distance may be measured based on the level of receiving sensitivity upon communicating with the stereoscopic glasses 60 as in the first embodiment, or may be measured by any other known technique.

The measurement module 52 transmits a distance signal indicating measured distance from the main body communication module 20 together with shutter control signals output from the glasses controller 159. To the stereoscopic glasses 60 identified by the index 60a, the measurement module 52 transmits a distance signal corresponding to the stereoscopic glasses 60 from the main body communication module 20. With this, the stereoscopic glasses 60 is individually notified of the distance to the digital television broadcast receiver 50.

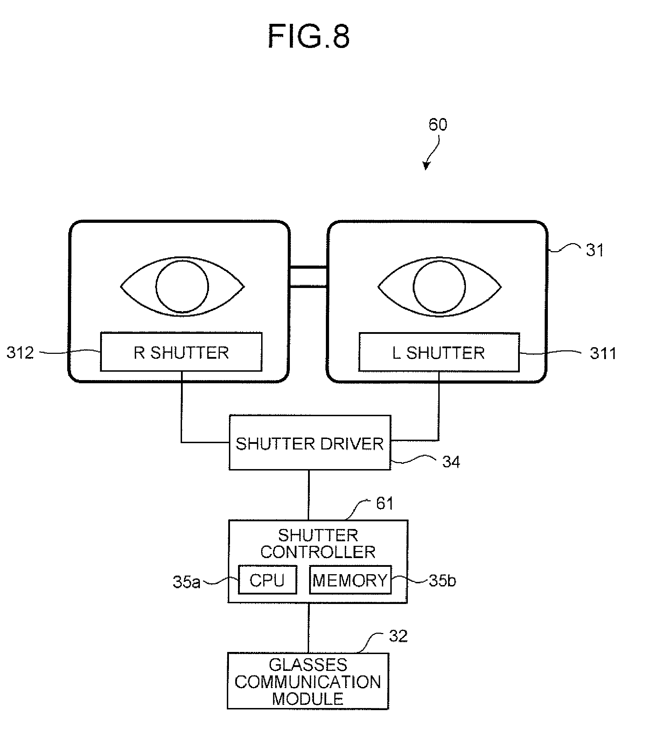

FIG. 8 illustrates a configuration of the stereoscopic glasses 60 of the second embodiment. As illustrated in FIG. 8, the stereoscopic glasses 60 comprise the LCD shutter glasses 31, the glasses communication module 32, the shutter driver 34, and a shutter controller 61.

As with the shutter controller 35 of the first embodiment, the shutter controller 61 of the stereoscopic glasses 60 comprises the CPU 35a and the memory 35b. According to left-eye and right-eye shutter control signals received through the glasses communication module 32, the shutter controller 61 controls the L shutter 311 and the R shutter 312 to open/close. Besides, according to a distance signal received through the glasses communication module 32, the shutter controller 61 controls the L shutter 311 and the R shutter 312 to open/close for stereoscopic view or planar view.

More specifically, if a distance indicated by the distance signal, i.e., the distance between the stereoscopic glasses 60 and the digital television broadcast receiver 50, is within the stereoscopic view available range, the shutter controller 61 outputs a drive signal to the shutter driver 34 to alternately open and close the L shutter 311 and the R shutter 312 in synchronization with the left-eye and right-eye shutter control signals received through the glasses communication module 32 (stereoscopic view mode).

On the other hand, if a distance indicated by the distance signal, i.e., the distance between the stereoscopic glasses 60 and the digital television broadcast receiver 50, is within the stereoscopic view unavailable range, the shutter controller 61 outputs a drive signal to the shutter driver 34 to simultaneously open and close the L shutter 311 and the R shutter 312 in synchronization with the left-eye or right-eye shutter control signal received through the glasses communication module 32 (planar view mode). The shutter control operation of the shutter controller 61 is basically the same as that of the shutter controller 35 previously described in connection with FIG. 5, and the description will not be repeated.

As described above, according to the second embodiment, the digital television broadcast receiver 50 measures the distance between the digital television broadcast receiver 50 (the video display module 19) and the stereoscopic glasses 60, and notifies the stereoscopic glasses 60 of the measured distance. According to the distance between the stereoscopic glasses 60 and the digital television broadcast receiver 50 (the video display module 19) notified by the digital television broadcast receiver 50, the stereoscopic glasses 60 changes the mode of opening and closing the LCD shutter glasses 31 to switch the display mode of video available for view between the stereoscopic view mode and the planar view mode.

Thus, according to the position of the user who is viewing stereoscopic video, i.e., the position of the stereoscopic glasses 60, the user can view video in the display mode suitable for the position. Even if a plurality of users are viewing the same stereoscopic video, the stereoscopic video is switched to planar video for only a user near the display screen. Thus, it is possible to reduce the eyestrain of the user near the display screen without affecting other users. Moreover, since the measurement module 33 can be eliminated from the configuration of the stereoscopic glasses 30 described above in the first embodiment, the configuration of the stereoscopic glasses 60 is simplified.

While the above embodiments are described by way of example as being applied to a stereoscopic video display device and stereoscopic glasses using LCD shutters, they are not so limited. The embodiments may be applied to any other type of stereoscopic video display device and stereoscopic glasses capable of allowing or hindering user's left eye vision and right eye vision individually.

The various modules of the systems described herein can be implemented as software applications, hardware and/or software modules, or components on one or more computers, such as servers. While the various modules are illustrated separately, they may share some or all of the same underlying logic or code.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. Stereoscopic glasses comprising:
a first shutter (311) configured to allow or hinder left eye vision;
a second shutter (312) configured to allow or hinder right eye vision;
a receiver (32) configured to receive a first control signal to open or close the first shutter (311) and a second control signal to open or close the second shutter (312) from a display device (10) that, in synchronization with display timing of a video signal for left eye and a video signal for right eye, displays the video signals; and
a controller (35) configured to control the first shutter (311) and the second shutter (312) to open or close based on the first control signal and the second control signal, respectively, while switching between stereoscopic view mode and planar view mode depending on distance to the display device (10).

2. The stereoscopic glasses of Claim 1, wherein
when the distance to the display device (10) is within a predetermined stereoscopic view available range, the controller (35) switches to the stereoscopic view mode to alternately open and close the first shutter (311) and the second shutter (312) based on the first control signal and the second control signal, and
when the distance to the display device (10) is out of the stereoscopic view available range, the controller (35) switches to the planar view mode to simultaneously open and close the first shutter (311) and the second shutter (312) based on the first control signal or the second control signal.

3. The stereoscopic glasses of Claim 1 or 2, further comprising a measurement module (33) configured to measure the distance to the display device (10), wherein
the controller (35) is configured switch between the stereoscopic view mode and the planar view mode to open and close the first shutter (311) and the second shutter (312) based on the first control signal and the second control signal, respectively, depending on the distance measured by the measurement module (33) .

4. The stereoscopic glasses of Claim 3, wherein the measurement module (33) is configured to measure the distance to the display device (10) based on strength of the first control signal and the second control signal received by the receiver (32) .

5. The stereoscopic glasses of Claim 1 or 2, wherein the controller (35) is configured to be notified by the display device (10) of the distance to the display device (10), and switches between the stereoscopic view mode and the planar view mode to open and close the first shutter (311) and the second shutter (312) based on the first control signal and the second control signal, respectively, depending on the distance.

6. A stereoscopic video display device comprising:
a display controller (15) configured to alternately display a video signal for left eye and a video signal for right eye on a display device (19);
a measurement module (52) configured to measure distance between the display device (19) and each pair of stereoscopic glasses (60) for viewing display on the display device (19); and
a transmitter (20) configured to transmit a control signal to the stereoscopic glasses (60) to alternately allow and hinder left eye vision and right eye vision of the stereoscopic glasses (60) in synchronization with display timing of the video signal for left eye and the video signal for right eye together with the distance measured by the measurement module (52).

7. A stereoscopic video display system comprising:
a stereoscopic video display device (10); and
stereoscopic glasses (30), wherein
a stereoscopic video display device (10) comprises
a display controller (15) configured to alternately display a video signal for left eye and a video signal for right eye on a display device (19), and
a transmitter (20) configured to transmit a first control signal in synchronization with display timing of the video signal for left eye and a second control signal in synchronization with display timing of the video signal for right eye to the stereoscopic glasses (30), and
the stereoscopic glasses (30) comprises
a first shutter (311) configured to allow or hinder left eye vision;
a second shutter (312) configured to allow or hinder right eye vision;
a receiver (32) configured to receive the first control signal and the second control signal; and
a controller (35) configured to control the first shutter (311) and the second shutter (312) to open or close based on the first control signal and the second control signal, respectively, while switching between stereoscopic view mode and planar view mode depending on distance between the display device (19) and the stereoscopic glasses (30).
